# EUROPÄISCHE PATENTSCHRIFT

(11) **EP 1 616 291 B1**
(45) Veröffentlichungstag und Bekanntmachung des Hinweises auf die Patenterteilung: **08.04.2009**
(21) Anmeldenummer: 04727008.7
(22) Anmeldetag: 13.04.2004
(51) Int. Cl.: G06K 19/077, G06K 19/14, G06K 7/00, G06K 7/10

(54) **KONTAKTLOSER DATENTRÄGER**
CONTACTLESS DATA CARRIER
PORTEUSE DE DONNEES SANS CONTACT

(30) Priorität: 14.04.2003 DE 10317257
(43) Veröffentlichungstag der Anmeldung: 18.01.2006
(73) Patentinhaber: Giesecke & Devrient GmbH, 81677 München (DE)
(72) Erfinder: GRAF, Hans, 83026 Rosenheim (DE); FINKENZELLER, Klaus, 85774 Unterföhring (DE); ROSSMADL, Alfred, 87737 Boos (DE)
(74) Vertreter: Klunker . Schmitt-Nilson . Hirsch
(86) Internationale Anmeldenummer: PCT/EP2004/003880
(87) Internationale Veröffentlichungsnummer: WO 2004/090800

(56) Entgegenhaltungen:
- FR-A- 2 770 316
- US-A- 5 347 110
- US-A- 5 789 733
- US-A- 5 825 045
- US-A1- 2003 052 159
- US-A1- 2003 057 276

## Beschreibung

Die vorliegende Erfindung betrifft eine Vorrichtung sowie ein Verfahren zur sicheren Feststellung der willentlichen Benutzung eines kontaktlosen Datenträgers.

Unter dem im Folgenden verwendeten Begriff "kontaktloser Datenträger" bzw. "Kontaktloskarte" werden alle Anordnungen verstanden, welche einen Mikrochip und eine mit diesem verbundene Antenne aufweisen und mit einem geeigneten Lesegerät Daten austauschen können. Hierzu zählen neben Chipkarten für Zahlungsanwendungen auch kontaktlos lesbare Identifikationsdokumente, wie Reisepässe und Personalausweise mit eingebautem Mikrochip sowie ferner RFID-Etiketten.

Kontaktlose Datenträger werden im Zahlungsverkehr heutzutage ausschließlich in geschlossenen Anwendungen, wie etwa zum Bezahlen in der Kantine, oder in öffentlichen Verkehrsmitteln eingesetzt. Der Grund hierfür ist, dass kontaktlose Karten aus Sicherheitsgründen in Deutschland bisher nicht für Zahlungsanwendungen wie z. B. als Geldkarte zugelassen sind. Ausschlaggebend hierfür ist die Befürchtung, dass vom Karteninhaber unbemerkt Dritte eine Geldkarte kontaktlos entladen könnten. Es wäre beispielsweise denkbar, dass mithilfe eines mobilen Terminals für kontaktlose Karten, welches durch Menschenansammlungen (z. B. Messen, Konzerte, U-Bahn, Bahnhof...) bewegt wird, unbemerkt "elektronisches" Geld aus den sich in der Nähe befindlichen Brieftaschen abgebucht werden kann. Bei kontaktbehafteten Karten tritt ein derartiges Problem nicht auf, da ein Zahlungsvorgang von dem Karteninhaber durch Einstecken der Karte in den Kartenleser erfolgt.

Neben der Verwendung als Zahlungsmittel können Kontaktloskarten auch als Datenträger in Wertdokumenten, wie z. B. Reisepässen eingesetzt werden. Insbesondere bietet es sich an, kontaktlose Karten als Visa zu verwenden, die in das Reisedokument aufgenommen, beispielsweise aufgeklebt, werden können. Hierzu eignet sich z.B. das Coil-on-Chip-Verfahren (CoC), bei dem die Antenne auf dem Chip angeordnet ist. Es können aber auch herkömmliche Kontaktlosanordnungen verwendet werden, wie z. B. Folien mit darauf angeordnetem Chip und einer auf der Folie aufgedruckten Spule.

Auch bei der Verwendung von Kontaktloskarten in Wertdokumenten stellt sich das Problem, dass ein unbeabsichtiges Lesen durch Dritte verhindert werden soll. Gleiches gilt für das unberechtigte und unbemerkte Auslesen von Kontaktlostranspondern die zur Produktkennzeichnung eingesetzt werden.

In FR-A-2 770 316 wird vorgeschlagen, ein ungewolltes Lesen einer kontaktlosen Karte dadurch zu vermeiden, dass sowohl die Karte als auch das Lesegerät mit optischen Sensoren ausgerüstet ist. In einem ersten Schritt wird ein Lichtstrahl vom Lesegerät auf die Karte gerichtet und dort von einem speziellen lichtreflektierenden Element an das Lesegerät zurückgestrahlt. Wenn das Lesegerät die Remissionsstrahlung erfasst, beginnt die Initialisierung der Karte. Vor dem Auslesen der Karte detektiert die Karte ihrerseits, ob sie Strahlung von dem Lesegerät empfängt, und nur im positiven Falle erfolgt die Autorisierung zur Übertragung von Daten zwischen dem Lesegerät und der Karte.

In der US 2003/0057276 A1 wird vorgeschlagen, eine automatisierte Identifikationsprüfung einer Identität eines Gegenstandes derart durchzuführen, dass ein optisch lesbares erstes Identifikationselement und ein kontaktlos auslesbares zweites Identifikationselement ausgelesen und deren Identifikationsinformationen auf Übereinstimmung geprüft werden (siehe Präambeln der unabhängigen Ansprüche). Sofern eine Übereinstimmung vorliegt, wird der mit den Identifikationselementen gekennzeichnete Gegenstand als korrekt identifiziert und authentisch eingestuft. Hierbei ist das zweite Identifikationselement als elektronisch auslesbares Identifikationselement ausgestaltet und an einer nicht sichtbaren Stelle des Gegenstands untergebracht.

Aufgabe der vorliegenden Erfindung ist die Bereitstellung einer anderen Vorrichtung sowie eines anderen Verfahrens zur sicheren Feststellung der willentlichen Benutzung eines kontaktlosen Datenträgers durch den Karteninhaber.

Die Aufgabe wird durch die Merkmale der unabhängigen Ansprüche gelöst. In davon abhängigen Ansprüchen sind vorteilhafte Ausgestaltungen und Weiterbildungen der Erfindung angegeben.

Mithilfe des zusätzlichen Datenübertragungskanals werden auf optischem Weg Daten zwischen Lesegerät und Datenträger ausgetauscht, die geeignet sind, eine Authentifizierung zwischen Lesegerät und Kontaktloskarte durchzuführen. Die Authentifizierung über den zusätzlichen Datenübertragungskanal verhindert ein unbeabsichtigtes Betätigen der Kontaktloskarte, da die optische Information nicht mehr zur Verfügung steht, wenn der Datenträger für das Lesegerät optisch nicht mehr sichtbar ist, also z. B. in einer Tasche/Geldbörse getragen wird.

Nach einer ersten Ausführungsform der Erfindung weist der Datenträger optisch lesbare Informationen auf, wie z. B. einen Strich- oder Matrixcode. Wird die Karte dem Lesegerät präsentiert, so wird diese Information mittels einer optischen Lesevorrichtung, z. B. einem Barcodescanner gelesen und ausgewertet. Die optisch gelesene Information kann anschließend von dem kontaktlosen Datenträger zur Authentifizierung mit dem kontaktlosen Lesegerät verwendet werden, um so die Berechtigung für eine anschließende Transaktion vorzuweisen.

Eine Erweiterung dieser ersten Ausgestaltung besteht darin, die optisch angezeigte Information durch den Chip auf eine Anzeigevorrichtung, z. B. einem LCD-Display auszugeben. Auf diese Weise ist ein einfaches Kopieren der Informationen nicht mehr möglich, da die Informationen auch zufällig generierte Datenstrukturen enthalten können.

Nach einer weiteren Ausgestaltung der Erfindung ist der kontaktlose Datenträger mit einem optischen Leuchtmittel ausgestattet, z. B. einer IR-Leuchtdiode oder einer Leuchtfolie. Dabei kann das Leuchtmittel über eine elektrische Verbindung mit dem Chip verfügen oder integraler Bestandteil des Chips sein. Sobald ein kontaktloses Lesegerät eine Transaktion mit dem Datenträger beabsichtigt, wird das Leuchtmittel verwendet, um zusätzlichen Daten vom Chip auf optischem Wege an das Lesegerät zu senden. Diese Daten können Bestandteil einer gegenseitigen Authentifizierung sein und werden erfindungsgemäß dazu verwendet, eine nachfolgende Transaktion freizugeben. Ohne Kenntnis der optisch übertragenen Daten im Lesegerät kann eine Transaktion mit dem Datenträger nicht durchgeführt werden.

Vorzugsweise lassen sich auf dem Datenträger Veränderungen der Umgebungsbedingungen detektieren, sobald diese für einen Bezahlvorgang aus der Tasche genommen wird. So kann beispielsweise mittels eines lichtempfindlichen optischen Bauteils (14) festgestellt werden, ob sich die Karte in einer Tasche oder ausserhalb befindet. Das lichtempfindliche Bauteil kann dabei über eine elektrische Verbindung mit dem Chip verfügen oder integraler Bestandteil des Chips sein. Sobald das lichtempfindliche Bauteil einer Mindesthelligkeit ausgesetzt ist, wird erfindungsgemäß ein Freigabesignal erzeugt, welches eine Transaktion des Chips mit dem kontaktlosen Lesegerät ermöglicht.

Der Vorteil dieser Variante besteht darin, dass keine speziellen kontaktlosen Terminals erforderlich sind, sondern die bisher schon vorhandene Infrastruktur (z. B. kontaktlose Terminals, wie sie bisher schon in geschlossenen Systemen, wie z. B. Kantine verwendet werden) weiter zu benutzen.

Eine Weiterbildung dieser Idee besteht darin, durch das Lesegerät selbst ein optisches Signal zu erzeugen. Zur Freigabe einer Transaktion mit dem Chip ist es denkbar, das optische Signal mit einer markanten Modulation, z. B. einem 1 kHz Signal zu versehen oder mittels des optischen Signals Daten an den Chip zu übertragen, welche zur Authentisierung zwischen Datenträger und Lesegerät verwendet werden.

Eine Kombination der vorgenannten Ausführungsformen besteht darin, auf der Karte sowohl ein optisches Leuchtmittel als auch ein optisches Empfangsmittel zur Verfügung zu stellen und mit dem Chip zu verbinden oder diese Mittel als integralen Bestandteil des Chips bereitzustellen. In diesem Falle wäre neben einer kontaktlosen bidirektionalen Datenübertragung zusätzlich eine bidirektionale optische Datenübertragung zwischen der Karte und einem Lesegerät durchführbar. Erfindungsgemäß ist dabei vorgesehen, zwischen den unterschiedlichen Übertragungskanälen zu wechseln, wobei jeder Übertragungskanal zumindest einmal für die Übertragung von Daten verwendet wird.

Ein weiterer Vorteil dieser Anordnung besteht darin, dass die Energie zum Betrieb der optischen Kommunikationsmittel aus dem kontaktlosen Übertragungskanal (z. B. magnetische oder kapazitive Kopplung) gewonnen wird. Es versteht sich darüber hinaus von selbst, dass für die optische Kommunikation neben sichtbarem Licht auch IR, UV oder eine Mischung (uplink vs. downlink) aus diesen Bereichen verwendet werden kann.

Analog zu optischer Information könnten zusätzlich auch akustische Informationen verwendet werden, z. B. in Form der Übertragung eines codierten akustischen Signals, welches z. B. mit einem in der Karte integrierten Lautsprecher (z. B. Piezolautsprecher) erzeugt werden kann.

Weiterhin ist ein in der Karte befindlicher Lautsprecher auch dazu geeignet, um jede Zahlungstransaktion mit einem Signal zu quittieren, welches dem Karteninhaber signalisiert, dass momentan ein Zahlungsvorgang auf seiner Karte stattfindet. In dieser Ausgestaltung der Erfindung wäre es zwar immer noch möglich, unerlaubt Geld mit einem mobilen kontaktlosen Terminal von der Karte zu buchen, jedoch bliebe eine Transaktion nicht unbemerkt.

Anstelle eines Lautsprechers kann alternativ oder zusätzlich auch vorgesehen sein, den Datenträger mit einem Vibrationsalarm zu versehen.

Die Erfindung wird im folgenden anhand der in der Zeichnung dargestellten Ausführungsbeispiele näher erläutert.

### Es zeigen:

- Fig.1: eine Ausführungsform der vorliegenden Erfindung, wobei auf dem Datenträger eine optische Information aufgebracht ist,
- Fig. 2: eine weitere Ausführungsform der Erfindung mit einem auf dem Datenträger angeordneten Leuchtmittel,
- Fig. 3: eine weitere Ausführungsform der Erfindung mit einem auf dem Datenträger angeordneten optischen Empfangsmittel,
- Fig. 4: eine weitere Ausführungsform der Erfindung mit einem auf dem Datenträger angeordneten optischen Bauteil,
- Fig. 5: ein Ausführungsbeispiel eines Verfahrens zur Ableitung eines kryptografischen Schlüssels, und
- Fig. 6: ein Ausführungsbeispiel eines Authentifizierungsverfahrens.

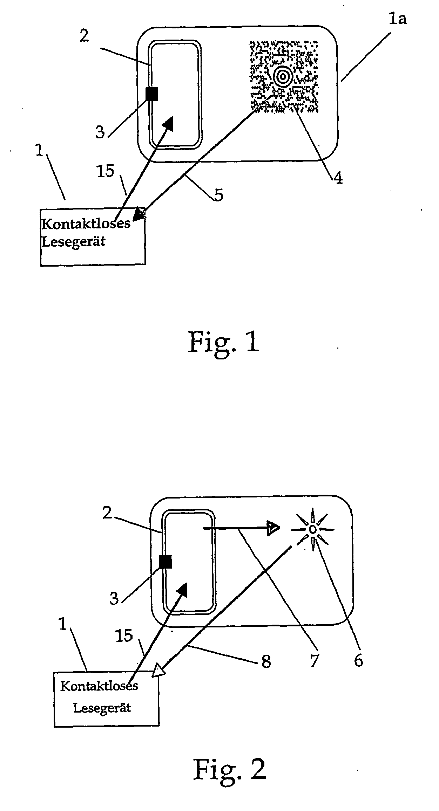

Fig. 1 zeigt einen kontaktlosen Datenträger 1a, mit einer auf diesem angeordneten Antenne 2 und einem mit diesem elektrisch leitend verbundenen Chip 3. Ein Bereich des Datenträgers weist optische Informationen 4, beispielsweise einen Barcode oder auch einen Matrixcode auf, welche geeignet sind, über einen optischen Datenübertragungskanal 5 an das Lesegerät 1 übertragen zu werden. Der optische Datenübertragungskanal 5 wird zusätzlich zu dem antennenbasierten kontaktlosen Datenübertragungskanal 15 bereitgestellt.

In Fig. 2 wird ein kontaktloser Datenträger beschrieben, auf dem ein optisches Leuchtmittel 6 angeordnet ist. Das Leuchtmittel 6, welches als LED, OLED oder auch als Infrarot-Leuchtdiode (IR-LED) ausgestaltet werden kann, ist, wie durch den Pfeil 7 angedeutet, mit dem Chip 3 elektrisch leitend verbunden und wird durch diesen angesteuert. Auch hier erfolgt eine optische Datenübertragung über den Datenübertragungskanal 8.

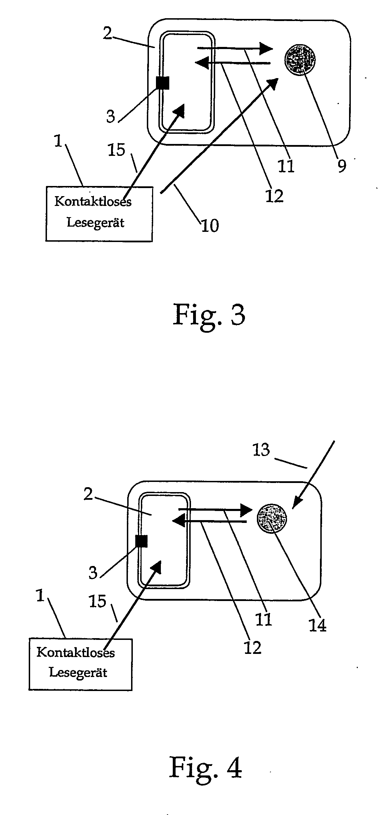

Eine weitere Ausführungsform ist in Fig. 3 dargestellt, bei dem auf dem Datenträger 1a ein optisches Empfangsmittel 9 angeordnet ist, welches mit dem Chip 3 elektrisch leitend verbunden ist und eine bidirektionale optische Datenübertragung zwischen Lesegerät 1 und Datenträger 1a ermöglicht. Dabei kann der Chip 3 die Steuerung der Datenübertragung sowohl für die kontaktlose 15 als auch für die optische Datenübertragung 10 übernehmen. Beide Übertragungskanäle können im Wechsel oder auch gleichzeitig betrieben werden. Ferner können die Übertragungskanäle gleichberechtigt oder hierarchisch (Master-Slave) betrieben werden.

Mithilfe des in Fig. 4 dargestellten optischen Bauteils 14, welches eine elektrisch leitende Verbindung 11 mit dem Chip 3 aufweist, kann bei ausreichendem Lichteinfall 13 die Datenübertragung über die antennenbasierte kontaktlose Schnittstelle freigegeben werden (durch den Pfeil 12 angedeutet).

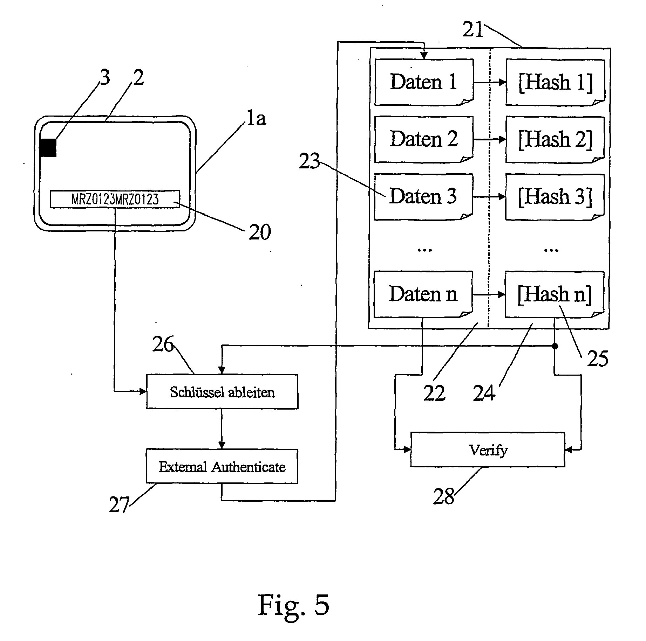

Das Verfahren zur Freigabe von im Datenträger 1a gespeicherten geheimen Informationen kann beispielsweise folgendermaßen ablaufen. Wie in Fig. 5 dargestellt, weist der Speicher 21 des Chips 3 mehrere Speicherbereiche 24 bzw. 22 auf, welche teilweise frei auslesbar sind und deren Inhalte teilweise mit Hilfe geeigneter Schlüssel gegen ein unberechtigtes Auslesen abgesichert sind. Der abgesicherte Speicherbereich 22 enthält mindestens einen Datensatz 23, der aus geheimzuhaltenen Informationen, wie z.B. Biometriedaten, PIN etc. besteht. Der frei auslesbare Speicherbereich 24 enthält mindestens einen Datensatz 25, der dem jeweiligen Datensatz 23 eindeutig zugeordnet ist und einen Komprimierungswert, z.B. einen CRC, Hash, eine kryptografische Prüfsumme etc. darstellt. Ein Rückschluß von dem Inhalt des frei auslesbaren Datensatzes 25 auf den Inhalt des geheimen Datensatzes 23 ist ausgeschlossen.

Zum Auslesen eines der Datensätze 23 ist erfindungsgemäß vorgesehen, in einem ersten Verfahrensschritt den diesem zugeordneten Datensatz 25 über den antennenbasierten Datenübertragungskanal 15 sowie die optisch lesbaren Informationen 20, z.B. ein Barcode oder eine MRZ (machine readable zone), des Datenträgers 1a mit Hilfe des Lesegerätes 1 auszulesen.

In einem zweiten Verfahrensschritt wird aus dem Datensatz 25 und den optisch lesbaren Informationen 20 ein kryptografischer Schlüssel 26 abgeleitet. Hierzu können beliebige Schlüsselableitungsverfahren eingesetzt werden, die aus dem Stand der Technik hinlänglich bekannt sind, wie z.B. Schlüsselableitung unter Verwendung eines Masterschlüssels, etc. Der für den Datenträger individuelle kryptografische Schlüssel, der aus dem geheimen Masterschlüssel abgeleitet ist, ist bereits auf dem Datenträger gespeichert. Der Masterschlüssel ist in dem Lesegerät abgelegt für die Ableitung des kryptografischen Schlüssels 26 mittels der optisch gelesenen Informationen 20 und dem kontaktlos gelesenen Datensatz 25.

Ein dritter Verfahrensschritt sieht vor, eine Authentifizierung 27 zwischen Lesegerät 1 und dem Chip 3 des Datenträgers 1a mittels des abgeleiteten kryptografischen Schlüssels durchzuführen. Hiermit wird überprüft, ob die jeweiligen dem Lesegerät 1 bekannten bzw. die im Datenträger 1a hinterlegten Schlüssel identisch sind. Ein bereits aus dem Stand der Technik bekanntes Authentifizierungsverfahren arbeitet nach dem "Challenge-Response-Prinzip", welches im Bereich der Chipkarten weite Verbreitung findet. Durch ein "GetChallenge"-Kommando erhält das Lesegerät 1 eine Zufallszahl von dem Chip 3, um sich anschließend durch die Daten eines "External Authenticate"-Kommando, die aus der Zufallszahl und dem Schlüssel abgeleitet sind, gegenüber dem Chip zu authentifizieren. Selbstverständlich können weitere Authentifizierungsschritte, beispielsweise zur gegenseitigen Authentifizierung, und andere Verfahren zur Authentifizierung verwendet werden.

In einem vereinfachten Verfahren soll sich das Lesegerät in dem dritten Verfahrensschritt lediglich als ein solches Authentifizieren, welches beide Datenübertragungskanäle benutzt, ohne dabei gleichzeitig die Kenntnis eines geheimen Schlüssels nachzuweisen. In dem zweiten Verfahrensschritt 26 wird dann beispielsweise ein Wert abgeleitet, der zwar als Schlüssel für den dritten Schritt 27 verwendet wird, aber nicht geheim bzw. aus einem Master-Schlüsel abgeleitet ist.

In einem optionalen letzten Verfahrensschritt wird aus dem geheimen Datensatz 23 ein Komprimierungswert gebildet und dieser mit dem Inhalt des frei auslesbaren Datensatzes 25 verglichen (s. Fig. 5, Überprüfung 28). Unterscheiden sich beide Komprimierungswerte, so ist davon auszugehen, dass der Datensatz 23 unbefugt verändert wurde. Nach erfolgreicher Authentifizierung kann der Datensatz 23 ausgelesen werden.

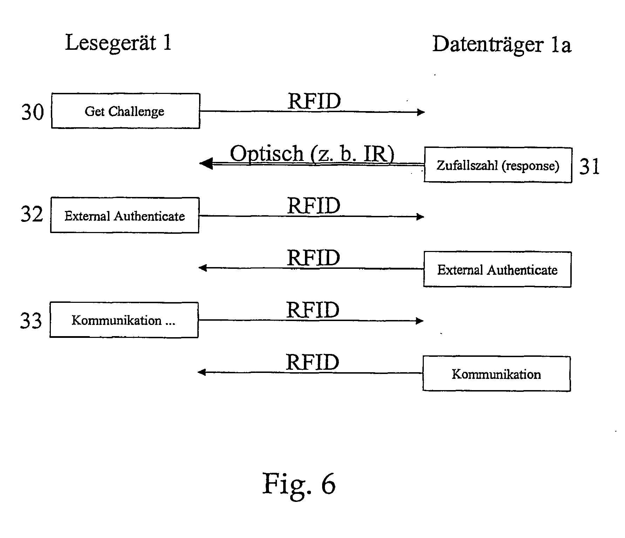

Das in Fig. 6 beschriebene Verfahren sieht ebenfalls vor zumindest auf einen Teil, der im Transponder gespeicherten Daten, den Zugriff nur nach erfolgreicher Authentisierung zu ermöglichen. Das Verfahren arbeitet auch nach dem "Challenge-Response-Prinzip".

In einem ersten Schritt 30 fordert das Lesegerät 1 eine Zufallszahl vom Datenträger 1a über den antennenbasierten Übertragungskanal 15 an. In einer erfindungsgemäßen Ausführungsform wird eine vom Datenträger 1a generierte Zufallszahl über den optischen Datenübertragungskanal 5, beispielsweise einer (Infrarot-/ UV-) LED, an das Lesegerät 1 übertragen (Schritt 31: "response"). Eine weitere Möglochkeit besteht darin, die Zufallszahl als Barcode, Pixelcode, MRZ (machine readable zone) auf einem Display 4 auf dem kontaktlosen Datenträger 1a aus zu geben. Auch kann gleichzeitig über den antennenbasierten Datenübertragungskanal 15 eine Antwort gesendet werden, welche sich inhaltlich von den auf optischem Wege übertragenen kontaktlosen Daten unterscheidet, aber einem Timeout auf dem Übertragungskanal, also insbesondere beim Lesegerät, vorbeugt. Einerseits kann ein potentieller Angreifer keine inhaltlichen Rückschlüsse beim Mithören des antennenbasierten Übertragungskanals 15 ziehen, andererseits ist aber auch keine besondere Behandlung einzelner Applikationskommandos erforderlich, so dass die Software des Lesegeräts 1 nicht verändert werden muss. Es bietet sich beispielsweise an, den Code "90 00" (Kommando erfolgreich ausgeführt) zu senden. Um eventuelle Angreifer irrezuführen, können auch falsche Daten übermittelt werden.

Es ist ebenfalls denkbar, die Zufallszahl über den optischen Datenübertragungskanal anzufordern und über den antennenbasierten Datenübertragungskanal zu übertragen.

Der Authentifizierungsalgorithmus läuft anschließend nach dem bekannten Verfahren zur einseitigen oder gegenseitigen Authentifizierung ("external authenthicate", 32) ab. Wurde die Authentifizierung erfolgreich abgeschlossen, so kann die eigentliche Kommunikation 33 beginnen und der Datensatz 23 ausgelesen werden.

Das in Bezug auf Fig. 6 beschriebene Verfahren kann in Kombination oder aber unabhängig von dem zu Fig. 5 beschriebenen Verfahren angewendet werden.

Ein Vorteil der beschriebenen Verfahren besteht darin, dass durch die Verwendung zweier unterschiedlicher Datenübertragungskanäle - des optischen 5 sowie des antennenbasierten 15 - ein Verfälschen oder Austauschen der Daten erheblich erschwert wird. Es eignet sich daher insbesondere für den Austausch von sensiblen, wie z. B. personenbezogenen Daten. Eine einseitige Authentifizierung oder eine gegenseitige Authentifizierung werden verbessert durch den miteinander verbundenen Einsatz der beiden Datenübertragungskanäle.

Sollen mit Hilfe des gleichen Datenträgers 1a auch sensible Daten verarbeitet werden, kann hierfür zwingend vorgesehen sein, beide Datenübertragungskanäle beim Auslesen durch das Lesegerät zu nutzen. Die Umschaltung zwischen ein bzw. zwei Übertragungskanälen kann dabei nach Setzen eines Flags o.ä. automatisiert erfolgen.

Bei einem erfindungsgemäßen Lesegerät 1 handelt es sich um ein intelligentes Gerät, welches sowohl über antennenbasierte kontaktlose Lesemittel 2 wie auch über optische Lesemittel verfügt. In einer bevorzugten Ausführungsform ist das Lesegerät 1 als mobiles Endgerät, z.B. Mobiltelefon, PDA, Laptop o.ä. ausgebildet und weist eine Schnittstelle zur Kontaktloskommunikation, wie NFC (Near Field Communication) auf. Als optisches Kommunikationsmittel kann die in den meisten Geräten vorhandene IRDA-Schnittstelle eingesetzt werden. Als optisches Lesemittel kann eine Kamera vorgesehen sein. Vorzugsweise werden die optisch lesbaren Daten, wie z.B. die Seriennummer des Chips 3 auf dem Datenträger 1a in einer maschinenlesbaren Form dargestellt (Barcode, OCR-Daten). Ein derartiges Lesegerät 1 eignet sich besonders zur Kontrolle von Reisedokumenten durch Polizei oder Grenzschutzbeamte, wobei über eine eventuell zusätzlich vorhandene Onlineverbindung weitere Abfragen ausgeführt werden können.

Zur Erhöhung der Sicherheit kann vorgesehen sein, dass der Chip 3 des Datenträgers 1a zusätzlich eine Zufallszahl als Seriennummer generiert und über den antennenbasierten Datenübertragungskanal an das Lesegerät 1 überträgt. Die Verwendung derartiger Zufallsseriennummern wird beispielsweise in der ISO 14443 (Chapter 6.4.4, "UID contents and cascade levels") beschrieben. Die zur Abwicklung des Antikollisionsalgorithmus benötigte Seriennummer des Datenträgers 1a besteht dabei nicht wie üblich aus einer eindeutigen und unverwechselbaren Ziffer, sondern aus einer bei jeder Transaktion neu erzeugten Zufallszahl. Durch diese Maßnahme ist kein Rückschluß aus der verwendeten Seriennummer auf die Identität des Datenträgers mehr möglich. Ein eventueller (Replay-)Angriff durch Wiederholen einer einmal abgehörten Kommunikation zwischen Datenträger und Terminal kann somit besonders effektiv verhindert werden.

Auch die optisch lesbaren Daten können nicht-statisch auf dem Datenträger 1a verfügbar sein und z.B. mit Hilfe eines Displays o.ä. dynamisch verändert werden. Es lassen sich derart auch Einmal-Passwörter, Zufallsseriennummern etc. generieren und darstellen. Ferner ist auch eine beliebige Kombination aus den dynamisch generierten und entweder antennenbasiert oder optisch übertragenen Daten denkbar.

## Patentansprüche

**1.** Kontaktloser Datenträger mit einer Antenne und einem Chip, wobei auf dem Datenträger antennenbasiert auslesbare Daten angeordnet sind, die über einen antennenbasierten Datenübertragungskanal an ein Lesegerät übertragbar sind, und wobei auf dem Datenträger optisch lesbare Daten angeordnet sind, die über einen optischen Datenübertragungskanal an ein Lesegerät übertragbar sind und die geeignet sind, eine Authentifizierung zwischen dem Datenträger und einem Lesegerät durchzuführen, **dadurch gekennzeichnet, dass** der Datenträger dazu eingerichtet ist, bei einer solchen Authentifizierung zwingend beide Datenübertragungskanäle zu verwenden, um ein Ableiten eines Wertes aus zumindest einem ersten Teil der antennenbasiert auslesbaren Daten und den optisch lesbaren Daten zu ermöglichen und einen Zugriff auf zumindest einen zweiten Teil der antennenbasiert auslesbaren Daten nur nach erfolgreicher Authentisierung mittels des abgeleiteten Werts zu ermöglichen.

**15.** Verfahren zur sicheren Feststellung der willentlichen Benutzung eines kontaktlosen Datenträgers, wobei in Abhängigkeit von den zwischen dem Datenträger und einem Lesegerät auszutauschenden Daten zusätzlich zu einer antennenbasierten kontaktlosen Datenübertragung von antennenbasiert aus dem Datenträger auslesbare Daten eine optische Datenübertragung erfolgt, wobei die optische Datenübertragung mit Hilfe von auf dem Datenträger angeordneten von dem Lesegerät optisch lesbaren Daten erfolgt, **dadurch gekennzeichnet, dass** eine Authentifizierung zwischen dem Datenträger und dem Lesegerät so erfolgt, dass zum Ableiten eines Wertes aus zumindest einem ersten Teil der antennenbasiert auslesbaren Daten

**2.** Datenträger nach Anspruch 1, **dadurch gekennzeichnet, dass** der Chip Speicherbereiche aufweist, wobei mindestens ein Speicherbereich frei auslesbar und mindestens ein Speicherbereich nur nach einer Authentifizierung von Datenträger und Lesegerät auslesbar ist.

**3.** Datenträger nach Anspruch 2, **dadurch gekennzeichnet, dass** der nur nach einer Authentifizierung auslesbare zweite Speicherbereich mindestens einen ersten Datensatz aufweist und der frei auslesbare Speicherbereich wenigstens einen zweiten Datensatz aufweist, der dem ersten Datensatz eindeutig zugeordnet ist und aus dem ersten Datensatz ableitbar ist.

**4.** Datenträger nach einem der Ansprüche 2 oder 3, **dadurch gekennzeichnet, dass** die gespeicherten Datensätze als mit einem kryptografischen Schlüssel verschlüsselte Datensätze gespeichert sind.

**5.** Datenträger nach Anspruch 3 oder 4, **dadurch gekennzeichnet, dass** der zweite Datensatz einen Komprimierungswert des ersten Datensatzes bildet.

**6.** Datenträger nach einem der Ansprüche 1 bis 5, **dadurch gekennzeichnet, dass** auf dem Datenträger ein lichtempfindliches Bauteil angeordnet ist, welches die Funktion des Chips in Abhängigkeit von der Helligkeit steuert.

**7.** Datenträger nach einem der Ansprüche 1 bis 6, **dadurch gekennzeichnet, dass** auf dem Datenträger die optisch lesbare Informationen aufgebracht sind.

**8.** Datenträger nach Anspruch 7, **dadurch gekennzeichnet, dass** auf dem Datenträger ein Matrixcode aufgebracht ist.

**9.** Datenträger nach Anspruch 7, **dadurch gekennzeichnet, dass** auf dem Datenträger ein Barcode aufgebracht ist.

**10.** Datenträger nach einem der vorhergehenden Ansprüche, **dadurch gekennzeichnet, dass** auf dem Datenträger ein Display zur Darstellung optischer Daten angeordnet ist.

**11.** Datenträger nach einem der vorhergehenden Ansprüche, **dadurch gekennzeichnet, dass** auf dem Datenträger ein Leuchtmittel zum Senden von optischen Signalen angeordnet ist.

**12.** Datenträger nach einem der vorhergehenden Ansprüche, **dadurch gekennzeichnet, dass** auf dem Datenträger ein optisches Empfangsmittel zum Empfangen von optischen Signalen angeordnet ist.

**13.** Datenträger nach einem der vorhergehenden Ansprüche, **dadurch gekennzeichnet, dass** auf dem Datenträger ein Lautsprecher angeordnet ist.

**14.** Datenträger nach einem der vorhergehenden Ansprüche, **dadurch gekennzeichnet, dass** auf dem Datenträger ein Vibrationsmelder angeordnet ist.

**16.** Verfahren nach Anspruch 15, **dadurch gekennzeichnet, dass** die Datenübertragung bidirektional erfolgt.

**17.** Verfahren nach Anspruch 15 oder 16, **dadurch gekennzeichnet, dass** zwischen der optischen und der antennenbasierten Datenübertragung beliebig umgeschaltet werden kann.

**18.** Verfahren nach einem der Ansprüche 15 bis 17, **dadurch gekennzeichnet, dass** eine zumindest einseitige Authentifizierung (27, 32) zwischen dem Lesegerät und dem Datenträger erfolgt.

**19.** Verfahren nach Anspruch 18, **dadurch gekennzeichnet, dass** durch die optische Datenübertragung die Authentifizierung erfolgt.

**20.** Verfahren nach einem der Ansprüche 15 bis 19, **dadurch gekennzeichnet, dass** eine Zufallszahl über einen der beiden optischen bzw. antennenbasierten Datenübertragungskanäle angefordert wird und über den jeweils anderen Datenübertragungskanal übertragen wird.

**21.** Verfahren nach einem der Ansprüche 15 bis 20, **dadurch gekennzeichnet, dass** für ein Auslesen eines ersten Datensatzes (23) in einem ersten Verfahrensschritt das Lesegerät einen zweiten Datensatz (25), der dem ersten Datensatz zugeordnet ist, und die optisch auf dem Datenträger dargestellten Daten (20) ausliest.

**22.** Verfahren nach Anspruch 21, **dadurch gekennzeichnet, dass** in einem zweiten Verfahrensschritt (26) das Lesegerät aus den ausgelesenen Daten und einem geheimen Schlüssel den abgeleiteten Wert bildet, dass
in einem dritten Verfahrensschritt auf der Grundlage des abgeleiteten Werts die Authentifizierung (27) zwischen Lesegerät und Datenträger erfolgt und dass
in einem vierten Verfahrensschritt der erste Datensatz (23) durch das Lesegerät ausgelesen wird.

**23.** Verfahren nach Anspruch 21 oder 22, **dadurch gekennzeichnet, dass** in einem fünften Verfahrensschritt aus dem ersten Datensatz ein Komprimierungswert gebildet wird und in einem weiteren Verfahrensschritt ein Vergleich des derart gebildeten Komprimierungswertes mit dem zweiten Datensatz erfolgt.
und den optisch lesbaren Daten sowohl die antennenbasierte als auch die optische Datenübertragung verwendet wird und ein Zugriff auf zumindest einen zweiten Teil der antennenbasiert auslesbaren Daten nur nach erfolgreicher Authentisierung mittels des abgeleiteten Werts möglich ist.

**25.** Lesegerät mit Mitteln zur antennenbasierten Datenübertragung von zumindest aus einem kontaktlosen Datenträger antennenbasiert auslesbaren Daten, mit Mittel zum optischen Lesen von optisch lesbaren Daten des Datenträgers, **dadurch gekennzeichnet dass** das Lesegerät eingerichtet ist, für eine Authentifizierung zwischen dem Lesegerät und dem Datenträger zwingend beide Datenübertragungsmittel zu verwenden, um einen Wert aus zumindest einem ersten Teil der antennenbasiert auslesbaren Daten und den optisch lesbaren Daten abzuleiten, der geeignet ist, nach erfolgreicher Authentisierung mittels des abgeleiteten Werts einen Zugriff auf zumindest einen zweiten Teil der antennenbasiert auslesbaren Daten zu gestatten.

**24.** Verfahren nach einem der Ansprüche 18 bis 23, **dadurch gekennzeichnet, dass** die Authentifizierung (27,32) nach Art eines challenge-response-Verfahrens durchgeführt wird.

**26.** Lesegerät nach Anspruch 25, **dadurch gekennzeichnet, dass** es Mittel zum Senden eines optischen Signals aufweist.

**27.** Lesegerät nach Anspruch 26, **dadurch gekennzeichnet, dass** es Mittel zum Modulieren des optischen Signals aufweist.

**28.** Lesegerät nach Anspruch 27, **dadurch gekennzeichnet, dass** es eine Infrarot-Schnittstelle aufweist.

**29.** Lesegerät nach einem der Ansprüche 25 bis 28, **dadurch gekennzeichnet, dass** es als mobiles Endgerät ausgebildet ist.

**30.** Lesegerät nach einem der Ansprüche 25 bis 29, **dadurch gekennzeichnet, dass** es eine Schnittstelle für die Nahbereichskommunikation aufweist.

**31.** Lesegerät nach einem der Ansprüche 25 bis 30 **dadurch gekennzeichnet, dass** es angepaßt ist zum Lesen eines kontaktlosen Datenträgers nach einem der Ansprüche 1 bis 14.

## Claims

1. A contactless data carrier with an antenna and a chip, wherein on the data carrier are disposed data which can be read out in an antenna-based fashion, which are transmittable via an antenna-based data transmission channel to a reading device, and wherein on the data carrier are disposed optically readable data which are transmittable via an optical data transmission channel to a reading device and which are suitable to carry out an authentication between the data carrier and a reading device, **characterized in that** the data carrier is adapted to imperatively use the two data transmission channels for such an authentication so as to permit a deriving of a value from at least a first part of the data which can be read out in an antenna-based fashion and the optically readable data and to permit an access to at least a second part of the data which can be read out in an antenna-based fashion only after a successful authentication by means of the derived value.

2. The data carrier according to claim 1, **characterized in that** the chip has memory areas, wherein at least one memory area can be freely read out and at least one memory area can be read out only after an authentication of data carrier and reading device.

3. The data carrier according to claim 2, **characterized in that** the second storage area, which can only be read out after an authentication, has at least one first data record and the storage area, which can be freely read out, has at least one second data record which is unambiguously allocated to the first data record and is derivable from the first data record.

4. The data carrier according to one of the claims 2 or 3, **characterized in that** the stored data records are stored as data records encrypted with a cryptographic key.

5. The data carrier according to claim 3 or 4, **characterized in that** the second data record forms a compression value of the first data record.

6. The data carrier according to any of claims 1 to 5, **characterized in that** on the data carrier a light-sensitive component is disposed which controls the function of the chip in dependence on the brightness.

7. The data carrier according to any of claims 1 to 6, **characterized in that** onto the data carrier is applied the optically readable information.

8. The data carrier according to claim 7, **characterized in that** onto the data carrier is applied a matrix code.

9. The data carrier according to claim 7, **characterized in that** onto the data carrier is applied a bar code.

10. The data carrier according to any of the above claims, **characterized in that** on the data carrier is disposed a display for representing optical data.

11. The data carrier according to any of the above claims, **characterized in that** on the data carrier is disposed an illuminant for sending optical signals.

12. The data carrier according to any of the above claims, **characterized in that** on the data carrier is disposed an optical receiving means for receiving optical signals.

13. The data carrier according to any of the above claims, **characterized in that** on the data carrier is disposed a loudspeaker.

14. The data carrier according to any of the above claims, **characterized in that** on the data carrier is disposed a vibration detector.

15. A method for reliably determining the deliberate use of a contactless data carrier, wherein in dependence on the data to be exchanged between the data carrier and a reading device in addition to an antenna-based contactless data transmission of data that can be read out from the data carrier in an antenna-based fashion an optical data transmission is effected, the optical data transmission being effected with the help of data disposed on the data carrier and optically readable by the reading device, **characterized in that** an authentication between the data carrier and the reading device is effected such that for deriving a value from at least a first part of the data which can be read out in an antenna-based fashion and the optically readable data both the antenna-based and the optical data transmission is used and an access to at least a second part of the data which can be read out in an antenna-based fashion is only possible after a successful authentication by means of the derived value.

16. The method according to claim 15, **characterized in that** the data transmission is effected in a bi-directional fashion.

17. The method according to claim 15 or 16, **characterized in that** any arbitrary switching between the optical and the antenna-based data transmission is possible.

18. The method according to any of claims 15 to 17, **characterized in that** at least a one-sided authentication (27, 32) is effected between the reading device and the data carrier.

19. The method according to claim 18, **characterized in that** the authentication is effected by the optical data transmission.

20. The method according to any of claims 15 to 19, **characterized in that** a random number is requested via one of the two data transmission channels either the optical or the antenna-based data transmission channel and is transmitted via the respective other data transmission channel.

21. The method according to any of claims 15 to 20, **characterized in that** for a readout of a first data record (23) in a first procedure step the reading device reads out a second data record (25), which is allocated to the first data record, and the data (20) optically represented on the data carrier.

22. The method according to claim 21, **characterized in that**
in a second procedure step (26) the reading device forms the value derived from the read-out data and a secret key, that
in a third procedure step on the basis of the derived value the authentication (27) between reading device and data carrier is effected and that
in a fourth procedure step the first data record (23) is read out by the reading device.

23. The method according to claim 21 or 22, **characterized in that** in a fifth procedure step from the first data record a compression value is formed and in a further procedure step a comparison is effected between the such formed compression value and the second data record.

24. The method according to any of claims 18 to 23, **characterized in that** the authentication (27, 32) is carried out in the manner of a challenge-response method.

25. A reading device having means for the antenna-based data transmission of data which can be read out in an antenna-based fashion from at least one contactless data carrier having means for the optical reading of optically readable data of the data carrier, **characterized in that** the reading device is adapted to imperatively use the two data transmission means for an authentication between the reading device and the data carrier, in order to derive a value from at least a first part of the data which can be read out in an antenna-based fashion and the optically readable data, which is suitable, after the successful authentication by means of the derived value, to allow an access to at least a second part of the data which can be read out in an antenna-based fashion.

26. The reading device according to claim 25, **characterized in that** it has means for sending an optical signal.

27. The reading device according to claim 26, **characterized in that** it has means for modulating the optical signal.

28. The reading device according to claim 27, **characterized in that** it has an infrared interface.

29. The reading device according to any of claims 25 to 28, **characterized in that** it is formed as a mobile terminal.

30. The reading device according to any of claims 25 to 29, **characterized in that** it has an interface for the near field communication.

31. The reading device according to any of claims 25 to 30 **characterized in that** it is adapted to read a contactless data carrier according to any of claims 1 to 14.

## Revendications

1. Support de données sans contact comportant une antenne et une puce, des données lisibles sur base d'antenne et transmissibles à un appareil de lecture par l'intermédiaire d'un canal de transmission de données basé sur antenne étant disposées sur le support de données, et des données optiquement lisibles et transmissibles à un appareil de lecture par l'intermédiaire d'un canal optique de transmission de données et appropriées à effectuer une authentification entre le support de données et un appareil de lecture étant disposées sur le support de données, **caractérisé en ce que** le support de données est configuré de manière à utiliser impérativement les deux canaux de transmission de données lors d'une telle authentification afin de permettre une déduction d'une valeur à partir d'au moins une première partie des données lisibles sur base d'antenne et à partir des données optiquement lisibles et de ne permettre un accès à au moins une deuxième partie des données lisibles sur base d'antenne qu'après authentification aboutie au moyen de la valeur déduite.

2. Support de données selon la revendication 1, **caractérisé en ce que** la puce comporte des zones de mémoire, au moins une zone de mémoire étant librement lisible et au moins une zone de mémoire n'étant lisible qu'après une authentification du support de données et de l'appareil de lecture.

3. Support de données selon la revendication 2, **caractérisé en ce que** la deuxième zone de mémoire lisible seulement après une authentification comporte au moins un premier jeu de données et **en ce que** la zone de mémoire librement lisible comporte au moins un deuxième jeu de données affecté univoquement au premier jeu de données et dérivable du premier jeu de données.

4. Support de données selon une des revendications 2 ou 3, **caractérisé en ce que** les jeux de données mémorisés sont mémorisés en tant que jeux de données cryptés par une clé cryptographique.

5. Support de données selon la revendication 3 ou 4, **caractérisé en ce que** le deuxième jeu de données constitue une valeur de compression du premier jeu de données.

6. Support de données selon une des revendications de 1 à 5, **caractérisé en ce qu'**un composant photosensible commandant la fonction de la puce en fonction de la luminosité est disposé sur le support de données.

7. Support de données selon une des revendications de 1 à 6, **caractérisé en ce que** les informations optiquement lisibles sont appliquées sur le support de données.

8. Support de données selon la revendication 7, **caractérisé en ce qu'**un code matriciel est appliqué sur le support de données.

9. Support de données selon la revendication 7, **caractérisé en ce qu'**un code-barres est appliqué sur le support de données.

10. Support de données selon une des revendications précédentes, **caractérisé en ce qu'**un écran d'affichage pour la représentation de données optiques est disposé sur le support de données.

11. Support de données selon une des revendications précédentes, **caractérisé en ce qu'**un agent lumineux pour l'envoi de signaux optiques est disposé sur le support de données.

12. Support de données selon une des revendications précédentes, **caractérisé en ce qu'**un agent de réception optique pour la réception de signaux optiques est disposé sur le support de données.

13. Support de données selon une des revendications précédentes, **caractérisé en ce qu'**un haut-parleur est disposé sur le support de données.

14. Support de données selon une des revendications précédentes, **caractérisé en ce qu'**un détecteur de vibrations est disposé sur le support de données.

15. Procédé de constatation sûre de l'utilisation volontaire d'un support de données sans contact, une transmission optique de données ayant lieu en fonction des données devant être échangées entre le support de données et un appareil de lecture en plus d'une transmission sans contact basée sur antenne de données lisibles sur base d'antenne à partir du support de données, la transmission optique de données ayant lieu à l'aide de données lisibles optiquement par l'appareil de lecture disposées sur le support de données, **caractérisé en ce qu'**une authentification entre le support de données et l'appareil de lecture a lieu de telle sorte que, pour déduire une valeur à partir d'au moins une première partie des données lisibles sur base d'antenne et à partir des données lisibles optiquement, tant la transmission de données basée sur antenne que la transmission optique sont utilisées, et qu'un accès à au moins une deuxième partie des données lisibles sur base d'antenne n'est possible qu'après authentification aboutie au moyen de la valeur déduite.

16. Procédé selon la revendication 15, **caractérisé en ce que** la transmission de données a lieu de manière bidirectionnelle.

17. Procédé selon la revendication 15 ou 16, **caractérisé en ce que** l'on peut commuter à volonté entre la transmission de données optique et celle basée sur antenne.

18. Procédé selon une des revendications de 15 à 17, **caractérisé en ce qu'**une authentification au moins unilatérale (27, 32) a lieu entre l'appareil de lecture et le support de données.

19. Procédé selon la revendication 18, **caractérisé en ce que** l'authentification a lieu par la transmission optique de données.

20. Procédé selon une des revendications de 15 à 19, **caractérisé en ce qu'**un nombre aléatoire est sollicité par un des deux canaux optique ou basé sur antenne et transmis par l'autre canal respectif de transmission de données.

21. Procédé selon une des revendications de 15 à 20, **caractérisé en ce que**, pour une lecture d'un premier jeu de données (23) au cours d'une première étape du processus, l'appareil de lecture lit un deuxième jeu de données (25) affecté au premier jeu de données, et les données (20) représentées optiquement sur le support de données.

22. Procédé selon la revendication 21, **caractérisé en ce que**, au cours d'une deuxième étape du processus (26), l'appareil de lecture constitue la valeur déduite à partir des données lues et d'une clé secrète,
**en ce que** l'authentification (27) entre l'appareil de lecture et le support de données a lieu au cours d'une troisième étape du processus sur la base de la valeur déduite,
et **en ce que** le premier jeu de données (23) est lu par l'appareil de lecture au cours d'une quatrième étape du processus.

23. Procédé selon la revendication 21 ou 22, **caractérisé en ce que**, au cours d'une cinquième étape du processus, un valeur de compression est constituée à partir du premier jeu de données et **en ce que**, au cours d'une étape ultérieure du processus, un comparaison a lieu entre la valeur de compression ainsi constituée et le deuxième jeu de données.

24. Procédé selon une des revendications de 18 à 23, **caractérisé en ce que** l'authentification (27, 32) est effectuée à la manière d'un procédé challenge /response.

25. Appareil de lecture comportant des agents de transmission basée sur antenne de données lisibles sur base d'antenne au moins à partir d'un support de données sans contact, comportant des agents de lecture optique de données du support informatique lisibles optiquement, **caractérisé en ce que** l'appareil de lecture est configuré de manière à utiliser impérativement les deux moyens de transmission de données pour une authentification entre l'appareil de lecture et le support de données afin de déduire à partir d'au moins une première partie des données lisibles sur base d'antenne et à partir des données optiquement lisibles une valeur qui est appropriée à autoriser un accès à au moins une deuxième partie des données lisibles sur base d'antenne après authentification aboutie au moyen de la valeur déduite.

26. Appareil de lecture selon la revendication 25, **caractérisé en ce qu'**il comporte des agents d'envoi d'un signal optique.

27. Appareil de lecture selon la revendication 26, **caractérisé en ce qu'**il comporte des agents de modulation du signal optique.

28. Appareil de lecture selon la revendication 27, **caractérisé en ce qu'**il comporte une interface infrarouge.

29. Appareil de lecture selon une des revendications de 25 à 28, **caractérisé en ce qu'**il est réalisé sous forme de terminal mobile.

30. Appareil de lecture selon une des revendications de 25 à 29, **caractérisé en ce qu'**il comporte une interface pour la communication en zone locale.

31. Appareil de lecture selon une des revendications de 25 à 30, **caractérisé en ce qu'**il est adapté à la lecture d'un support de données sans contact selon une des revendications de 1 à 14.
